# EUROPEAN PATENT SPECIFICATION

(11) **EP 3 142 093 B1**
(45) Date of publication and mention of the grant of the patent: **23.06.2021**
(21) Application number: 16188218.8
(22) Date of filing: 09.09.2016
(51) Int. Cl.: G08G 5/00

(54) **AIRCRAFT SYSTEMS AND METHODS FOR ENHANCED WAYPOINT LIST DISPLAY**
FLUGZEUGSYSTEME UND VERFAHREN ZUR VERBESSERTEN WEGPUNKTLISTENANZEIGE
SYSTÈMES D'AÉRONEF ET PROCÉDÉS D'AFFICHAGE DE LISTE DE POINT DE CHEMINEMENT AMÉLIORÉE

(30) Priority: 14.09.2015 US 201514853554
(43) Date of publication of application: 15.03.2017
(73) Proprietor: Honeywell International Inc., Morris Plains, NJ 07950 (US)
(72) Inventor: Kulkarni, Kapil Vasantrao, Morris Plains, NJ 07950 (US)
(74) Representative: Houghton, Mark Phillip

(56) References cited:
- US-A1- 2011 118 908
- US-B2- 8 050 860
- Chris Norstrom: "Scrollbar of Contents", , 4 May 2011 (2011-05-04), XP002766658, Retrieved from the Internet: URL:https://chrisnorstrom.com/2011/04/crea tion-scrollbar-of-contents-ui/ [retrieved on 2017-02-02]
- Chris Norstrom: "Invention: Introducing The "Content Aware Scrollbar" UI", , 21 February 2011 (2011-02-21), XP055528095, Retrieved from the Internet: URL:https://chrisnorstrom.com/2011/02/crea tion-introducing-the-content-aware-scrollb ar-ui/ [retrieved on 2018-11-28]

## Description

### TECHNICAL FIELD

The present invention generally relates to a visual display system for an aircraft, and more particularly, the present invention relates to a visual display system that produces an enhanced display of flight plan waypoints.

### BACKGROUND

Aircraft and aircraft systems continue to advance in sophistication. Flight management systems are used on aircraft to integrate information from data sources and to perform, or assist a user in performing, functions related to, for example, navigation, flight planning, guidance and navigation, and performance management. Many aircraft have a visual display system, such as a multifunction control display unit (MCDU) or a cockpit display unit (CDU), coupled to the flight management system that displays a number of different screen pages in which the user can obtain information or perform functions. For example, such systems may be used to display a flight plan.

A conventional display may be problematic in that, generally, it has a limited viewable area for a user to obtain a desired portion of a flight plan or other type of information. This can be an issue because flight plans can have hundreds of waypoints and require long sequential navigations to arrive at the desired portion of the flight plan, which may be time consuming and inefficient.

Accordingly, it is desirable to provide an aircraft visual display system on which long flight plans are efficient and easy to view. Furthermore, other desirable features and characteristics of the present invention will become apparent from the subsequent detailed description of the invention and the appended claims, taken in conjunction with the accompanying drawings and this background of the invention.

US8050860B2 discloses a method and device for displaying a flight plan of an aircraft. The display device includes a display presenting unit making it possible to identify the flight phase of each waypoint of a flight plan which is displayed on a screen, and an activation unit making it possible to directly access a corresponding flight phase page.

### BRIEF SUMMARY

The present invention provides an aircraft system according to claim 1 of the appended claims.

### BRIEF DESCRIPTION OF THE DRAWINGS

The present invention will hereinafter be described in conjunction with the following drawing figures, wherein like numerals denote like elements, and
FIG. 1 is a schematic representation of an aircraft system with a visual display system in accordance with an exemplary embodiment;
FIG. 2 is a display generated by the aircraft system of FIG. 1 in accordance with an exemplary embodiment;
FIG. 3 is a display generated by the aircraft system of FIG. 1 in accordance with another exemplary embodiment;
FIG. 4 is a display generated by the aircraft system of FIG. 1 in accordance with a further exemplary embodiment;
FIG. 5 is a display generated by the aircraft system of FIG. 1 in accordance with a further exemplary embodiment; and
FIG. 6 is a flowchart of a method for displaying a flight plan.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Broadly, exemplary embodiments described herein include an aircraft system having an aircraft visual display system with a display device such as a multifunctional control display unit (MCDU) or cockpit display unit (CDU). In accordance with an exemplary embodiment, the system enables more efficient navigation of the flight plans on the display device. For example, the system may render a display with a scroll bar having symbology representing characteristics of groups of waypoints or other aspects of the flight plan, such as flight phase, waypoint type, and/or time of arrival.

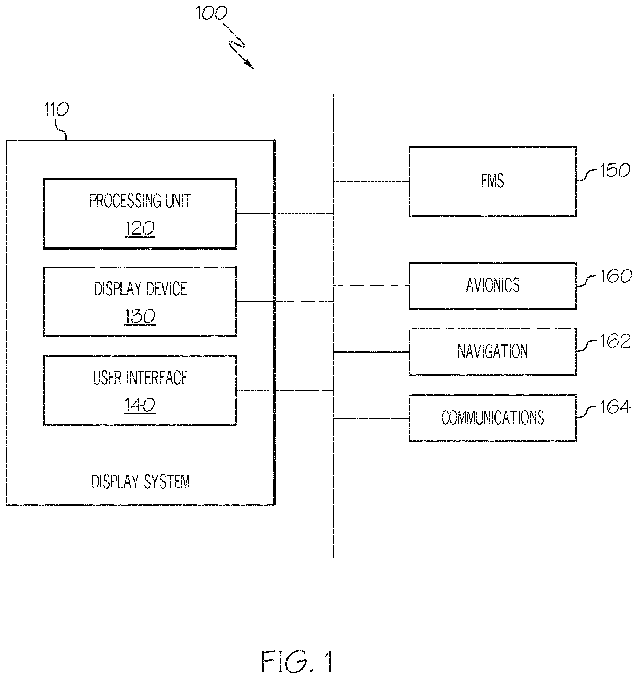

FIG. 1 is a schematic representation of an aircraft system 100 with a visual display system 110 coupled to a flight management system 150 and one or more data sources 160, 162, 164. The components and subcomponents of system 100 may be coupled together in any suitable manner, such with as a data bus. Although the system 100 appears in FIG. 1 to be arranged as an integrated system, the system 100 is not so limited and can also include an arrangement whereby one or more aspects of the system 100 are separate components or subcomponents of another system located either onboard or external to the aircraft.

The visual display system 110 includes a processing unit 120, a display device 130, and a user interface 140. Generally, the visual display system 110 displays information from the flight management system 150 via the display device 130 and enables interaction between a user (e.g., a pilot or other type of operator) and the flight management system 150, as described in greater detail below. Additional information about the operation will be provided below after a brief introduction of each component.

As noted above, the processing unit 120 may be a computer processor associated with flight planning and management functions, particularly the display and navigation of a list of waypoints, such as in a flight plan. In one exemplary embodiment, the processing unit 120 functions to at least receive and/or retrieve aircraft flight management information (e.g., from the flight management system 150 and data sources 160, 162, 164). As introduced above and discussed in further detail below, the processing unit 120 additionally calculates and generates display commands for displaying the flight management information. The processing unit 120 may function as a graphics display generator to generate display commands based on algorithms or other machine instructions stored in the processing unit 120 or in separate memory components. The processing unit 120 then sends the generated display commands to display device 130 for presentation to the user. The processing unit 120 may additionally receive and generate display commands based on inputs via the user interface 140.

Depending on the embodiment, the processing unit 120 may be implemented or realized with a general purpose processor, a content addressable memory, a digital signal processor, an application specific integrated circuit, a field programmable gate array, suitable programmable logic device, discrete gate or transistor logic, processing core, discrete hardware components, or any combination thereof. In practice, the processing unit 120 includes processing logic that may be configured to carry out the functions, techniques, and processing tasks or methods associated with operation of the system 100. The processing unit 120 may further include any suitable type of memory or data storage, such as for example, RAM, ROM, EEPROM, flash memory, optical or magnetic storage devices, or any other medium that can be used to store and access desired information.

The display device 130 is coupled to the processing unit 120 for rendering information to the user based on display commands. In one exemplary embodiment, the display device 130 may be a multifunction monitor, unit, or any display suitable for displaying various symbols and information, such as a multifunction control display unit (MCDU), cockpit display device (CDU), primary flight display (PFD), and/or navigation display. Any suitable type of display medium capable of visually presenting multi-colored or monochrome flight information for a pilot or other flight crew member can be provided, such as, for example, various types of CRT displays, LCDs, OLED displays, plasma displays, projection displays, HDDs, HUDs, and the like.

As noted above, the user interface 140 is coupled to the processing unit 120 to allow a user to interact with the display device 130 and/or other elements of the system 100. The user interface may be realized as a keypad, touchpad, keyboard, mouse, touch panel, joystick, knob, line select key or another suitable device adapted to receive input from a user. In further embodiments, the user interface 140 is realized as audio input and output devices, such as a speaker, microphone, audio transducer, audio sensor, or the like. In some embodiments, the user interface may be incorporated into the display device 130. For example, in one embodiment, the display device 130 and user interface 140 are integrated as an interactive MCDU with a display screen and a keyboard, touch-screen and/or other mechanisms for function, display, and/or cursor control.

The flight management system 150 is coupled to the display system 110 and one or more data sources 160, 162, 164 and generally functions to support navigation, flight planning, and other aircraft control functions, as well as provides real-time data and/or information regarding the operational status of the aircraft. The flight management system 150 may include or otherwise access one or more of the following: a weather system, an air traffic management system, a radar system, a traffic avoidance system, an autopilot system, a flight control system, crew alerting systems, electronic checklist systems, an electronic flight bag, and/or other suitable avionics systems. In particular, the flight management system 150 may store and/or generate a flight plan for traveling between a current or initial destination and a final destination.

The data sources 160, 162, 164 can include any suitable type of data source that may be used to construct or modify the flight plan, such as an avionics database 160, a navigation system 162, and a communications system 164, as examples. The avionics database 160 may store aeronautical information data, including, for example, flight plan data, data related to airways, navigational aids, navigational data, obstructions, taxi registration, Special Use Airspace, political boundaries, COM frequencies, approach information, geographical information and the like. The navigation system 162 is configured to provide real-time navigational data and/or information regarding operation of the aircraft. The communications system 164 is suitably configured to support communications between the aircraft and another aircraft or ground location (e.g., air traffic control) via a radio system or another suitable data link system.

As introduced above, the display system 110 particularly functions to display a flight plan, including as examples, a selected or otherwise designated flight plan for subsequent execution, a flight plan selected for review, and/or a flight plan currently being executed by the aircraft. In some embodiments, the flight management system 150 may store predefined flight plans, while in further embodiments, the flight plan may be uplinked via the communications system 164 and/or manually entered or created by the user via the user interface 140.

In this regard, as used herein, a flight plan should be understood as a sequence of navigational reference points or waypoints that define a flight path or route for the aircraft. In this regard, depending on the particular flight plan and type of air navigation, the navigational reference points may comprise navigational aids, such as VHF omnidirectional ranges (VORs), distance measuring equipment (DMEs), tactical air navigation aids (TACANs), and combinations thereof (e.g., VORTACs); landing and/or departure locations (e.g., airports, airstrips, runways, landing strips, heliports, helipads, and the like); geographical features; position fixes (e.g., initial approach fixes (IAFs) and/or final approach fixes (FAFs)); and other navigational reference points used in area navigation. As used herein, the terms "waypoints," "landmarks," and "navigational aids" may be considered interchangeable as specific terminology may vary between the aviation, maritime and motor vehicle communities. As described in greater detail below, the flight plan is generally displayed as a textual list of waypoints in their order of proximity to the aircraft along a planned track. During flight, as the aircraft passes each successive waypoint, that waypoint may drop off the list and the remaining successive waypoints move up the list.

As also described in greater detail below, the waypoints are considered to have various types of characteristics, attributes, or properties (generally, "characteristics"). These characteristics are a function of the waypoint itself or a function of the placement of the waypoint within the flight plan. For example, a waypoint may be associated with a particular type of aircraft procedure (e.g., a turn or holding procedure) or be associated with a designated constraint, such as noise, altitude, or speed constraints. As further examples, a waypoint may be associated with a specific segment of the flight plan (e.g., departure, enroute, STAR approach, missed approach, and/or alternate flight plan). As additional examples, a waypoint may be associated with a time attribute, such as the duration from a current position to the waypoint. Exemplary embodiments discussed herein are applicable to any type of waypoint characteristic. As described below, the system 100 generates a display on the display device 130 to provide information about these waypoint characteristics to the user.

Generally, the flight management system 150 may associate these different characteristics (and associated symbology, discussed below) to waypoints of a flight plan based on various factors. For example, the flight management system 150 may determine some waypoint characteristics based on information from the navigation system 162 and/or avionics database 160 (e.g., identifying a waypoint as a runway or compulsory reporting point; identifying stored defined patterns associated with the waypoint, such as procedure turns, published holding patterns, etc.) or based on flight plan modifications (e.g., the crew and/or operator may insert a holding pattern at a specific waypoint as instructed by ground station). In practice, the flight management system 150 may evaluate and divide the entire flight plan to map the waypoints to specific flight phases (or segments), e.g., departure, en-route, arrival procedures, etc. For example the flight management system 150 can assign waypoints from origin to top of climb as departure waypoints; from top of climb to top of descent including any step climbs as en-route waypoints; and from top of descent to destination as arrival waypoints. Additionally some attributes or characteristics are determined by the way the flight plan is programmed into the flight management system 150, such as for example, waypoints entered on alternate flight plan pages as part of an alternate flight plan. As described in greater detail below, the display system 110 uses these different characteristics defined by the flight management system 150 to depict different symbology.

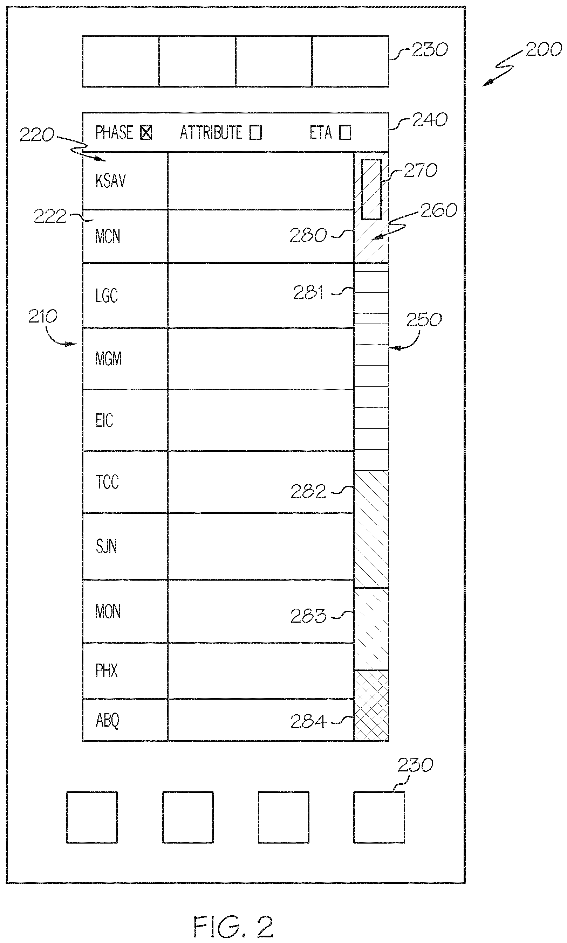

FIG. 2 is a display 200 generated on the display device 130 by the system 100 of FIG. 1 in accordance with an exemplary embodiment. As shown, the display 200 includes a first area (or display area) 210 that includes information relating to navigation and control of the aircraft. In the view of FIG. 2, the first area 210 is displaying the flight plan in the form of a list 220 with a chronological sequence of waypoints 222. Characteristics of the waypoints 222 and display of the list 220 will be discussed in greater detail below.

The current screen page in the first area 210 can be changed or manipulated by pressing one or more mode or function keys 230. Upon selection of a waypoint 222 in the list 220 and/or one of the additional keys 230, various functions may be enabled, e.g., entering flight plan data, performance data, and navigation data, as well as initiating functions such as printing the flight plan and aligning the inertial reference system. Although not specifically shown, the display 200 may further include a multifunction keyboard and scratchpad area.

Returning to the list 220 of waypoints 222 in the first area 210, the information displayed for each waypoint 222 generally includes the name or identifier of the waypoint (e.g., "KSAV"), the location and/or position of the waypoint relative to the aircraft, and other data of interest, such as the weather or temperature at the waypoint. For simplicity, in the view of FIG. 2, only the identifier for each waypoint 222 is displayed, while the additional information may be provided adjacent to the respective waypoint identifier.

Depending upon viewing settings (e.g., the selected zoom level and the available number of rows on the display device), the first area 210 may only be capable of displaying a portion of the flight plan at a given time due to the length of the list 220. As an example, the list 220 may include hundreds of waypoints 222. In the view of FIG. 2, ten (10) waypoints 222 are displayed. These ten waypoints 222, in this view, are the initial ten waypoints of the list 220, while dozens of waypoints are also in the list "below" the displayed waypoints.

Given the length of the list 220, the display 200 further includes a scroll bar 250 generated adjacent the first area 210 that enables the user to navigate through the list 220 as desired. Generally, the scroll bar 250 includes a long rectangular area, referred to as a scrolling region 260 (also referred to as an elevator shaft or trough). The scroll bar 250 further includes a scroll indicator 270 (also referred to as a bar, thumb, puck, wiper, or knob) that may be moved within the scrolling region 260 by the user. The position of the scroll indicator 270 corresponds to the position of the list 220 displayed within the first area 210 at a given point in time, e.g., if the indicator 270 is located at the bottom of a vertically-oriented scrolling region 260, the first area 210 displays the lower portion of the list 220. As shown, the initial ten waypoints 222 are displayed, and the scroll indictor 270 is appropriately at the top of the scrolling region 260. Similarly, the height of the indicator 270 relative to the height of the scrolling region 260 is generally proportional to the length of the displayed portion relative to the total length of the list 220.

Utilizing the user interface 140 as a control device (e.g., a mouse, knobs, touchscreen, or the like), a user may interact with the scroll bar 250 to determine which portion of the list 220 is displayed within the first area 210 at a given time. For example, and again referring to a vertically-oriented scrolling region 260, a user may drag the indicator 270 to a desired location to scroll the displayed portion of the list 220 upward or downward. A user may also adjust the indicator 270, and thus the displayed portion, by selecting or clicking above or below the indicator 270 within the scrolling region 260, using vertical arrows (not shown), and/or various keyboard commands (e.g., keyboard arrows or page up or down keys). As a result, the user may use the scroll bar 250 to navigate the list 220, for example, to find a particular waypoint of interest and/or to review portions of the flight plan, as necessary or desired.

Given the length of the list 220, visually scanning individual waypoints 222 while manually scrolling through the list 220 may be inefficient when attempting to locate a particular waypoint of interest. To address this issue, the display 200 may further provide information about the one or more waypoints within the scrolling region 260. The information may correspond to the waypoint characteristics discussed below. The waypoint characteristics may be represented by any type of symbology, including symbols, text, color, or the like.

In the view of FIG. 2, waypoint characteristics corresponding to the respective flight plan segments (or phases) are provided in the form of cross-hatched symbology. In particular, the scrolling region 260 is subdivided into scrolling region portions 280-284, each of which correspond to one of the flight plan segments.

For example, in this particular flight plan, there are five (5) flight plan segments, and as a result, the scrolling region 260 includes five (5) scrolling region portions 280-284 that correspond to these segments. In this example, the scrolling region portions 280-284 respectively correspond to a departure/SID segment 280, an enroute segment 281, a STAR/approach segment 282, a missed approach segment 283, and an alternate flight plan segment 284.

Each of the waypoints 222 in the list 220 is within one of these segments, and thus, fall within one of the scrolling region portions 280-284. Adjacent scrolling region portions 280-284 are separated by a horizontal bar, and each portion 280-284 has different cross-hatching to more clearly distinguish the segments. In the view of FIG. 2, the indicator 270 is positioned within region portion 280 corresponding to the departure/SID segment, thereby indicating that the currently displayed waypoints 222 are part of the departure/SID segment. However, if the user desires to review waypoints within the missed approach segment of the flight plan, the user may reposition the indicator 270 into the scrolling region portion 283. In response, the first area 210 will reposition the list 220 to display the waypoints 222 associated with that portion of the scrolling region. Rather than scrolling through individual waypoints searching for the desired segment, the scroll bar 250 provides symbology that enables the user to scroll directly to the desired segment. In one exemplary embodiment, the indicator 270 may be partially transparent such that the symbology underneath the indicator 270 may be viewed.

As also shown in FIG. 2, the first area 210 may include a characteristic menu 240 that defines the type of information to display to the operator. In other embodiments, the menu 240 may be omitted and the displayed information may be predetermined or preset. In the exemplary embodiment of FIG. 2, the characteristic menu 240 has selections for phase, attribute, and estimated time of arrival (ETA), and in the particular scenario of FIG. 2, the phase characteristic has been selected, as described below. The other characteristics of menu 240 are described below.

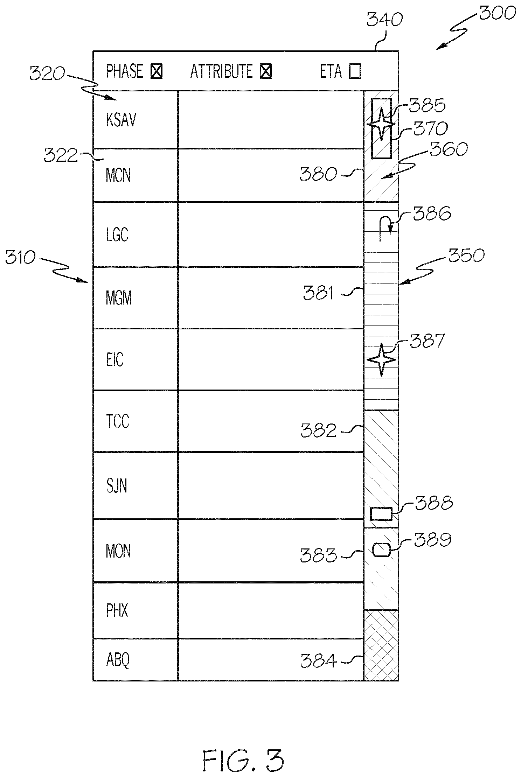

FIG. 3 is a display 300 generated by the display device 130 of the visual display system 110 of FIG. 1 in accordance with another exemplary embodiment. With the exceptions discussed below, the display 300 generally corresponds to the display 200 of FIG. 2. In FIG. 3, only a portion of the display 300 is shown, particularly a first area (or display area) 310 and scroll bar 350, although other display features may be provided.

As above, the first area 310 displays the flight plan in the form of a list 320 with a chronological sequence of waypoints 322. The display 300 further includes a characteristic menu 340 that enables the operator to select the type of information to be displayed. In the scenario of FIG. 3, the phase and attribute characteristics have been selected, as discussed below. Also as above, the display 300 further includes a scroll bar 350 defined by a scrolling region 360 and scroll indicator 370. The scrolling region 360 is divided into scrolling region portions 380-384 that correspond to flight plan segments, such as the flight plan segments discussed above in FIG. 2.

According to the invention of FIG. 3, the display 300 further includes additional symbology 385-389 that represents one or more additional characteristics about the waypoints 322, e.g., as selected by the operator on the menu 340. In this example, the display 300 further includes characteristics corresponding to attributes of a particular waypoint 322 within the list 320. As shown, the symbology 385-389 may be overlaid with the symbology representing flight plan segments in scrolling region portions 380-384. As examples, symbol 385 represents the position of the active waypoint; symbol 386 represents the position of a waypoint that is associated with a turn procedure; symbol 387 represents the position of a waypoint that is associated with an altitude constraint; symbol 388 represents the position of a waypoint that is associated with a runway; and symbol 389 represents the position of a waypoint that is associated with a holding pattern. Any suitable symbology may be used, although as shown in the depicted exemplary embodiment, the symbology may represent the nature of the respective characteristic (e.g., a bent arrow representing a turn and/or an elongated bar representing a runway). As such, rather than scrolling through individual waypoints searching for a desired waypoint, the scroll bar 350 provides symbology that enables the user to scroll directly to the waypoint of interest.

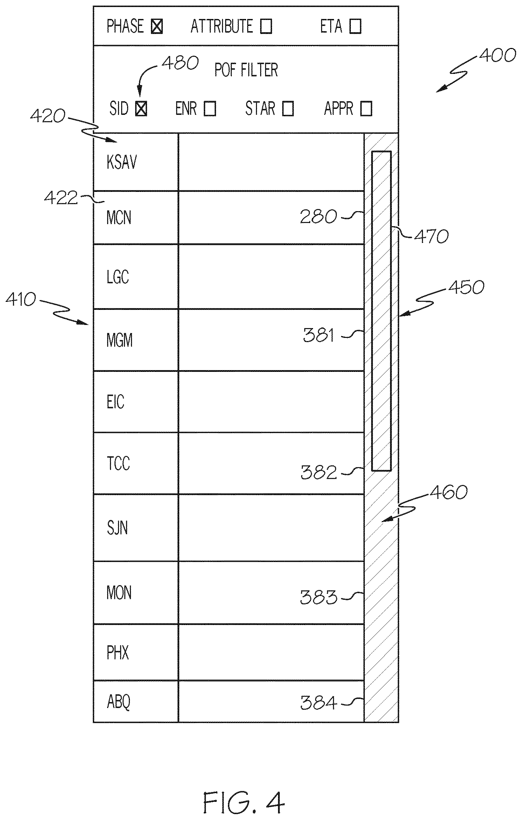

FIG. 4 is a display 400 generated by the display device 130 of the visual display system 110 of FIG. 1 in accordance with an example not forming part of the invention. With the exceptions discussed below, the display 400 generally corresponds to the display 200 of FIG. 2. In FIG. 4, only a portion of the display 400 is shown, particularly a first area (or display area) 410 and scroll bar 450, although other display features may be provided.

As above, the first area 410 displays the flight plan in the form of a list 420 with a chronological sequence of waypoints 422. Also as above, the display 400 further includes a scroll bar 450 defined by a scrolling region 460 and scroll indicator 470. In this exemplary embodiment, interface symbology or menu 480 is provided for filtering the waypoints 422 within the list based on a particular characteristic. In one exemplary implementation, the menu 480 may include selection boxes for activating or deactivating the display of waypoints according to a particular characteristic. In the depicted example, the interface symbology 480 corresponds to different flight segments, including a SID segment, an enroute (ENR) segment, a STAR segment, and an approach (APPR) segment. The user may select or deselect one or more of these boxes within the symbology 480 to display or "hide" the associated segments.

For example, in the depicted example the SID segment of the interface symbology 480 is selected, and as a result, only the waypoints 422 associated with the SID segment are displayed. The interface symbology 480 may be combined with one or more the types of symbology 280-284, 385-389 discussed above in FIGS. 2 and 3. As a result of this embodiment, the operator is able to view only the selected segment or phase of flight, which enables a more detailed and/or efficient review of the waypoint characteristics. For example, to locate a waypoint with the holding pattern in the approach segment, an operator may select the filter symbology 480 associated with the approach segment and then more readily view the designated symbology corresponding to the holding pattern that may be displayed for respective waypoint on the scroll bar 450.

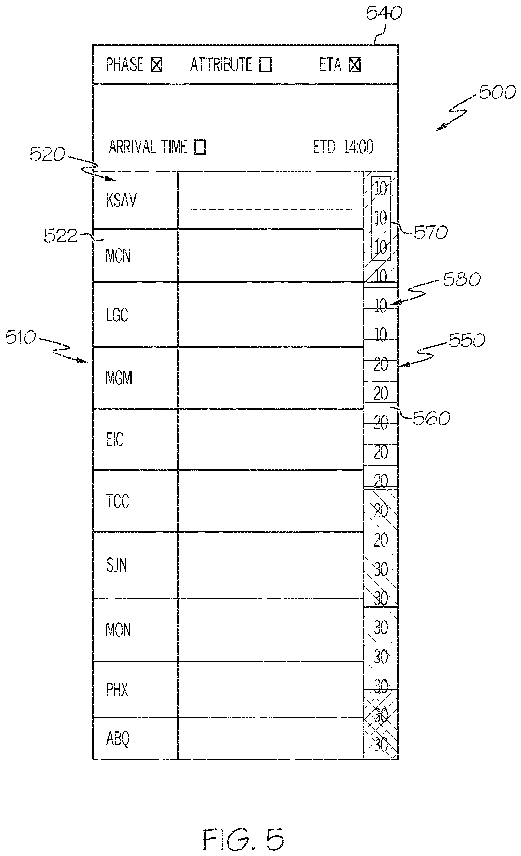

FIG. 5 is a display 500 generated by the display device 130 of the visual display system 110 of FIG. 1 in accordance with another exemplary embodiment. With the exceptions discussed below, the display 500 generally corresponds to the display 200 of FIG. 2. In FIG. 5, only a portion of the display 500 is shown, particularly a first area (or display area) 510 and scroll bar 550, although other display features may be provided.

As above, the first area 510 displays the flight plan in the form of a list 520 with a chronological sequence of waypoints 522. Also as above, the display 500 further includes a scroll bar 550 defined by a scrolling region 560 and scroll indicator 570. The display 500 further includes a characteristic menu 540 that enables the operator to select the type of information to be displayed. In the scenario of FIG. 5, the phase and estimated time of arrival (ETA) characteristics have been selected, as discussed below. In this example, the phase characteristics of the waypoints 522 correspond to those discussed above in reference to FIG. 2.

In this exemplary embodiment, additional information associated with the waypoints 522 is provided in the form of timing symbology 580. The display 500 may further provide an indication of the estimated (or actual) time of departure 582.

The timing symbology 580 is arranged within the scrolling region 560 and represents the approximate time of arrival at the respective waypoints. The time of arrival may be represented in terms of minutes from the current time or minutes from the estimated time of departure. As shown, the timing symbology 580 may be in the form of numerical increments, which in the depicted embodiment are 10 minute increments for a total of three increments (e.g., 10 minutes, 20 minutes, and 30 minutes). As an example, the timing symbology 580 of "10" corresponds to the waypoints 522 within the list 520 that are approximately 10 minutes away, while the "20" and "30" correspond to the waypoints 522 that are approximately 20 and 30 minutes away, respectively. In the depicted embodiment, 10 minute increments are provided to avoid clutter and provide clarity for the timing symbology 580 within the scrolling region 560. In some embodiments, the increments or timing resolution may be a function of the remaining duration. In particular, at longer durations, the increments may be greater, while the increments may become finer as the duration shortens, such as occurs when flying the flight plan. As a result of this exemplary embodiment, a user may navigate directly to a waypoint or group of waypoints at a desired duration.

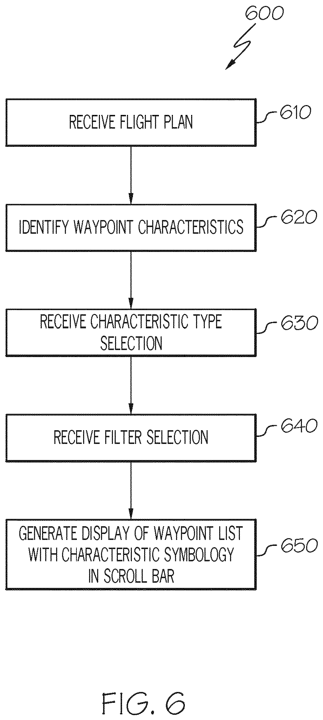

FIG. 6 is a flowchart of a method 600 for generating and displaying an enhanced waypoint list. The method 600 may be implemented with the system 100 discussed above, and as such, FIG. 1 is referenced below in the discussion of FIG. 6.

In a first step 610, the system 100 receives and/or generates a flight plan that includes a sequential list of waypoints. In step 620, the system 100 may identify one or more types of characteristics associated with the waypoints, e.g., as determined by the flight management system 150 and/or stored in one of the data sources 160, 162, 164.

In step 630, the system 100 receives a user selection that identifies the type of characteristic for display; and in step 640, the system 100 receives a user selection that identifies a display filter. The user selections of steps 630, 640 may be provided via the user interface 140. In some embodiments, the user selections of one or both of steps 630, 640 may be omitted and/or predetermined.

In step 650, the display system 110 of the system 100 generates a display of the waypoint list, such as those discussed above in FIGS. 2-5, in accordance wiith the user selections. As also noted above, the display generated in step 650 may include symbology representing the waypoint characteristics within the scroll bar region of the display.

Accordingly, exemplary embodiments enable more efficient navigation within a flight plan on a display device, such as a textual list of waypoints on the MCDU. This permits the user to focus on the task of appropriately operating the aircraft instead of focusing on scrolling through the flight plan pages of the MCDU. As such, exemplary embodiments decrease flight crew heads-down time, ease pilot workload, and improve the efficiency with which pilots operate their aircraft. Exemplary embodiments expedite processing of flight plan information, reduce the amount of required user interaction, and efficiently display information about a desired waypoint or other flight plan element. It should be noted that the exemplary embodiments of FIGS. 2-5 are merely representative implementations and other implementations and/or symbology (including colors, fading, transparency, and the like) are possible

Although the subject matter is described herein in an aviation context, it should be understood that the subject matter may be similarly utilized in other applications involving a predefined route for travel (e.g., a travel plan or travel route) or with another vehicle (e.g., space craft, automobiles, marine vessels, trains, and/or unmanned air or land vehicles), and the subject matter described herein is not intended to be limited to an aviation environment.

Techniques and technologies may be described herein in terms of functional and/or logical block components, and with reference to symbolic representations of operations, processing tasks, and functions that may be performed by various computing components or devices. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

For the sake of brevity, conventional techniques related to graphics and image processing, navigation, flight planning, aircraft controls, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

While at least one exemplary embodiment has been presented in the foregoing detailed description of the invention, it should be appreciated that various changes may be made in the function and arrangement of elements described in an exemplary embodiment without departing from the scope of the invention as set forth in the appended claims.

## Claims

1. An aircraft system (100), comprising:
a flight management system (150) configured to generate a flight plan with a plurality of waypoints;
a processing unit (120) coupled to the flight management (150) and configured to receive the flight plan, the processing unit (120) further configured to generate display commands representing the flight plan as a list of the waypoints;
a display device (130) coupled to the processing unit and configured to receive the display commands and render a first area (210; 310; 410; 510) with a portion of the list (220; 320; 420; 520) of waypoints (222; 322; 422; 522) and a scroll bar (250; 350; 450; 550) adjacent the first area (210; 310; 410; 510), wherein the scroll bar (250; 350; 450; 550) includes a scrolling region (260; 360; 460; 560) and a scroll indicator (270; 370; 470; 570) positioned within the scrolling region (260; 360; 460; 560) based on user input to modify the portion of the list (220; 320; 420; 520) displayed in the first area (210; 310; 410; 510), wherein the height of the scroll indicator (270; 370; 470; 570) relative to the height of the scrolling region (260; 360; 460; 560) is proportional to the length of the portion of the list (220; 320; 420; 520) displayed in the first area (210; 310; 410; 510) relative to the total length of the list (220; 320; 420; 520) of waypoints (222; 322; 422; 522), and
wherein the display device (130) is further configured to render first symbology (385-389; 580, 582) within the scrolling region (260; 360; 460; 560) that represents a first characteristic associated with at least one of the waypoints (222; 322; 422; 522) in the flight plan; and
a user interface (140) coupled to the processing unit (120) and configured to receive a user selection of the first characteristic from a plurality of characteristics, the processing unit (120) configured to generate the display commands based on the user selection, and wherein the display device (130) is configured to display a menu (240; 340; 480; 580) of the plurality of characteristics, and the user interface (140) is configured to receive the user selection via the menu (240; 340; 480; 540) on the display device (130),
wherein the first characteristic is a flight plan segment and the first symbology (385-389; 580, 582) represents the respective flight plan segment for each of the waypoints (222; 322; 422; 522), and wherein the scrolling region (260; 360; 460; 560) is sub-divided into scrolling region portions, each including the first symbology in the form of cross-hatching representing the respective flight plan segment for each of the scrolling region portions, and
wherein the display device (130) is further configured to render second symbology within the scrolling region (260; 360; 460; 560) that represents a second characteristic associated with at least one of the waypoints (222; 322; 422; 522) in the flight plan, and wherein the second characteristic is a waypoint attribute comprising at least one of a turn procedure, an active waypoint, an altitude constraint, a runway, and a holding pattern, the second symbology including a different symbol for each type of waypoint attribute.

2. The aircraft system of claim 1, wherein the display device (130) is a multifunction control display unit (MCDU).

3. (Currently Amended) The aircraft system of claim 1, wherein the display device (130) is further configured to render third symbology within the scrolling region (260; 360; 460; 560) that represents a third characteristic associated with at least one of the waypoints (222; 322; 422; 522) in the flight plan, wherein the third characteristic is an estimated time of arrival, and the third symbology (385-389; 580, 582) includes numerical representations (580, 582) of the estimated time of arrival for each of the waypoints.

4. The aircraft system of claim 1, wherein the processing unit (120) is further configured to receive a filter selection and to generate the display commands such that the display device (130) renders the list (220; 320; 420; 520) of waypoints (222; 322; 422; 522) additionally based on the filter selection.

## Patentansprüche

1. Flugzeugsystem (100), das umfasst:
ein Flugmanagementsystem (150), das konfiguriert ist, um einen Flugplan mit einer Vielzahl von Wegpunkten zu erzeugen;
eine Verarbeitungseinheit (120), die mit dem Flugmanagement (150) gekoppelt und konfiguriert ist, um den Flugplan zu empfangen, wobei die Verarbeitungseinheit (120) ferner konfiguriert ist, um Anzeigebefehle zu erzeugen, die den Flugplan als eine Liste der Wegpunkte darstellen;
eine Anzeigevorrichtung (130), die mit der Verarbeitungseinheit gekoppelt und konfiguriert ist, um die Anzeigebefehle zu empfangen und einen ersten Bereich (210; 310; 410; 510) mit einem Abschnitt der Liste (220; 320; 420; 520) von Wegpunkten (222; 322; 422; 522) und einer Bildlaufleiste (250; 350; 450; 550) neben dem ersten Bereich (210; 310; 410; 510) wiederzugeben, wobei die Bildlaufleiste (250; 350; 450; 550) einen Bildlaufbereich (260; 360; 460; 560) und einen Bildlaufindikator (270; 370; 470; 570) einschließt, der innerhalb des Bildlaufbereichs (260; 360; 460; 560) positioniert ist, basierend auf Benutzereingaben, um den Abschnitt der Liste (220; 320; 420; 520) zu ändern, der im ersten Bereich (210; 310; 410; 510) angezeigt ist, wobei die Höhe des Bildlaufindikators (270; 370; 470; 570) relativ zur Höhe des Bildlaufbereichs (260; 360; 460; 560) proportional zur Länge des Abschnitts der Liste (220; 320; 420; 520) ist, der im ersten Bereich (210; 310; 410; 510) angezeigt wird, relativ zur Gesamtlänge der Liste (220; 320; 420; 520) von Wegpunkten (222; 322; 422; 522), und
wobei die Anzeigevorrichtung (130) ferner konfiguriert ist, um die erste Symbologie (385-389; 580, 582) innerhalb des Bildlaufbereichs (260; 360; 460; 560) wiederzugeben, der ein erstes Merkmal darstellt, das mindestens einem der Wegpunkte (222; 322; 422; 522) im Flugplan zugeordnet ist; und
eine Benutzerschnittstelle (140), die mit der Verarbeitungseinheit (120) gekoppelt und konfiguriert ist, um eine Benutzerauswahl des ersten Merkmals aus einer Vielzahl von Merkmalen zu empfangen, wobei die Verarbeitungseinheit (120) konfiguriert ist, um die Anzeigebefehle basierend auf der Benutzerauswahl zu erzeugen, und wobei die Anzeigevorrichtung (130) konfiguriert ist, um ein Menü (240; 340; 480; 580) der Vielzahl von Merkmalen anzuzeigen, und die Benutzerschnittstelle (140) konfiguriert ist, um die Benutzerauswahl mittels des Menüs (240; 340; 480; 540) auf der Anzeigevorrichtung (130) zu empfangen,
wobei das erste Merkmal ein Flugplansegment ist und die erste Symbologie (385-389; 580, 582) das jeweilige Flugplansegment für jeden der Wegpunkte (222; 322; 422; 522) darstellt, und wobei der Bildlaufbereich (260; 360; 460; 560) in Bildlaufbereichsabschnitte unterteilt ist, die jeweils die erste Symbologie in Form einer Schraffur einschließen, die das jeweilige Flugplansegment für jeden der Bildlaufbereichsabschnitte darstellt, und
wobei die Anzeigevorrichtung (130) ferner konfiguriert ist, um eine zweite Symbologie innerhalb des Bildlaufbereichs (260; 360; 460; 560) wiederzugeben, die ein zweites Merkmal darstellt, das mindestens einem der Wegpunkte (222; 322; 422; 522) im Flugplan zugeordnet ist, und wobei das zweite Merkmal ein Wegpunktattribut ist, das mindestens ein Abbiegeverfahren, einen aktiven Wegpunkt, eine Höhenbeschränkung, eine Landebahn und ein Haltemuster umfasst, wobei die zweite Symbologie ein anderes Symbol für jeden Typ von Wegpunktattribut einschließt.

2. Flugzeugsystem nach Anspruch 1, wobei die Anzeigevorrichtung (130) eine Multifunktionssteueranzeigeeinheit (MCDU) ist.

3. Flugzeugsystem nach Anspruch 1, wobei die Anzeigevorrichtung (130) ferner konfiguriert ist, um eine dritte Symbologie innerhalb des Bildlaufbereichs (260; 360; 460; 560) wiederzugeben, die ein drittes Merkmal darstellt, das mindestens einem der Wegpunkte (222; 322; 422; 522) im Flugplan zugeordnet ist, wobei das dritte Merkmal eine geschätzte Ankunftszeit ist, und die dritte Symbologie (385-389; 580, 582) numerische Darstellungen (580, 582) der geschätzten Ankunftszeit für jeden der Wegpunkte einschließt.

4. Flugzeugsystem nach Anspruch 1, wobei die Verarbeitungseinheit (120) ferner konfiguriert ist, um eine Filterauswahl zu empfangen und die Anzeigebefehle so zu erzeugen, dass die Anzeigevorrichtung (130) die Liste (220; 320; 420; 520) von Wegpunkten (222; 322; 422; 522) zusätzlich basierend auf der Filterauswahl wiedergibt.

## Revendications

1. Système d'aéronef (100) comprenant :
un système de gestion de vol (150) configuré pour générer un plan de vol avec une pluralité de points de cheminement ;
une unité de traitement (120) couplée à la gestion de vol (150) et configurée pour recevoir le plan de vol, l'unité de traitement (120) étant en outre configurée pour générer des instructions d'affichage représentant le plan de vol sous la forme d'une liste des points de cheminement ;
un dispositif d'affichage (130) couplé à l'unité de traitement et configuré pour recevoir les instructions d'affichage et restituer une première zone (210 ; 310 ; 410 ; 510) avec une portion de la liste (220 ; 320 ; 420 ; 520) de points de cheminement (222 ; 322 ; 422 ; 522) et une barre de défilement (250 ; 350 ; 450 ; 550) adjacente à la première zone (210 ; 310 ; 410 ; 510), dans lequel la barre de défilement (250 ; 350 ; 450 ; 550) comprend une région de défilement (260 ; 360 ; 460 ; 560) et un indicateur de défilement (270 ; 370 ; 470 ; 570) positionné dans la région de défilement (260 ; 360 ; 460 ; 560) sur la base de l'entrée d'utilisateur pour modifier la portion de la liste (220 ; 320 ; 420 ; 520) affichée dans la première zone (210 ; 310 ; 410 ; 510), dans lequel la hauteur de l'indicateur de défilement (270 ; 370 ; 470 ; 570) par rapport à la hauteur de la région de défilement (260 ; 360 ; 460 ; 560) est proportionnelle à la longueur de la portion de la liste (220 ; 320 ; 420 ; 520) affichée dans la première zone (210 ; 310 ; 410 ; 510) par rapport à la longueur totale de la liste (220 ; 320 ; 420 ; 520) de points de cheminement (222 ; 322 ; 422 ; 522), et
dans lequel le dispositif d'affichage (130) est en outre configuré pour restituer une première symbologie (385-389 ; 580, 582) dans la région de défilement (260 ; 360 ; 460 ; 560) qui représente une première caractéristique associée à au moins l'un des points de cheminement (222 ; 322 ; 422 ; 522) dans le plan de vol ; et
une interface utilisateur (140) couplée à l'unité de traitement (120) et configurée pour recevoir une sélection d'utilisateur de la première caractéristique parmi une pluralité de caractéristiques, l'unité de traitement (120) étant configurée pour générer les instructions d'affichage sur la base de la sélection d'utilisateur, et dans lequel le dispositif d'affichage (130) est configuré pour afficher un menu (240 ; 340 ; 480 ; 580) de la pluralité de caractéristiques et l'interface utilisateur (140) est configurée pour recevoir la sélection d'utilisateur via le menu (240 ; 340 ; 480 ; 540) sur le dispositif d'affichage (130),
dans lequel la première caractéristique est un segment de plan de vol et la première symbologie (385-389 ; 580, 582) représente le segment de plan de vol respectif pour chacun des points de cheminement (222 ; 322 ; 422 ; 522), et dans lequel la région de défilement (260 ; 360 ; 460 ; 560) est subdivisée en portions de région de défilement, chacune comprenant la première symbologie sous la forme de hachures croisées représentant le segment de plan de vol respectif pour chacune des portions de région de défilement, et
dans lequel le dispositif d'affichage (130) est en outre configuré pour restituer une deuxième symbologie dans la région de défilement (260 ; 360 ; 460 ; 560) qui représente une deuxième caractéristique associée à au moins l'un des points de cheminement (222 ; 322 ; 422 ; 522) dans le plan de vol, et dans lequel la deuxième caractéristique est un attribut de point de cheminement comprenant au moins un élément parmi une procédure de virage, un point de cheminement actif, une contrainte d'altitude, une piste et un circuit d'attente, la deuxième symbologie comprenant un symbole différent pour chaque type d'attribut de point de cheminement.

2. Système d'aéronef selon la revendication 1, dans lequel le dispositif d'affichage (130) est une unité d'affichage de commande multifonction (MCDU).

3. Système d'aéronef selon la revendication 1, dans lequel le dispositif d'affichage (130) est en outre configuré pour restituer une troisième symbologie dans la région de défilement (260 ; 360 ; 460 ; 560) qui représente une troisième caractéristique associée à au moins l'un des points de cheminement (222 ; 322 ; 422 ; 522) dans le plan de vol, dans lequel la troisième caractéristique est une heure d'arrivée estimée et la troisième symbologie (385-389 ; 580, 582) comprend des représentations numériques (580, 582) de l'heure d'arrivée estimée pour chacun des points de cheminement.

4. Système d'aéronef selon la revendication 1, dans lequel l'unité de traitement (120) est en outre configurée pour recevoir une sélection de filtre et pour générer les instructions d'affichage, de sorte que le dispositif d'affichage (130) restitue la liste (220 ; 320 ; 420 ; 520) de points de cheminement (222 ; 322 ; 422 ; 522) en fonction également de la sélection de filtre.
